# EUROPÄISCHE PATENTSCHRIFT

(11) **EP 1 586 361 B1**
(45) Veröffentlichungstag und Bekanntmachung des Hinweises auf die Patenterteilung: **22.08.2012**
(21) Anmeldenummer: 05103030.2
(22) Anmeldetag: 15.04.2005
(51) Int. Cl.: B01D 45/16

(54) **Ölabscheider**
Oil separator
Separateur d'huile

(30) Priorität: 17.04.2004 DE 102004018732
(43) Veröffentlichungstag der Anmeldung: 19.10.2005
(73) Patentinhaber: Berle, Gunnar, 2440 Geel (BE)
(72) Erfinder: Berle, Gunnar, 2440 Geel (BE)
(74) Vertreter: Gille Hrabal

(56) Entgegenhaltungen:
- DE-A1- 19 738 912
- US-A- 3 989 489
- US-A- 4 906 264
- US-A- 5 676 717

## Beschreibung

Die Erfindung betrifft einen Abscheider zum Trennen einer flüssigen von einer gasförmigen Phase bei einem Kompressor gemäß dem Oberbegriff des ersten Anspruchs, wobei die Flüssigkeit zum Schmieren und/oder Kühlen dient. Insbesondere betrifft die Erfindung einen Ölabscheider, wie er insbesondere nach Kompressoren, beispielsweise bei einem Kühlschrankkompressor, Schraubenkompressor und dergleichen verwendet wird.

Bei Kompressoren, die beispielsweise zur Erzeugung von Druckluft verwendet werden, kommen Schraubenverdichter zum Einsatz. Besonders verbreitet ist dabei der Zweischraubenkompressor, bei dem zwischen zwei ineinander greifenden schraubenartigen Rotoren und dem Kompressorgehäuse ein Kompressionsraum gebildet wird. Durch das Drehen der Rotoren verringert sich das eingeschlossene Volumen kontinuierlich, so dass die komprimierte Luft (Gas) durch einen Auslass aus dem Kompressorgehäuse herausgedrückt wird. Dabei ist es notwendig, Öl (oder eine entsprechende für den Einsatzzweck geeignete Flüssigkeit, beispielsweise Wasser) in den Kompressorraum einzuspritzen, da das Öl einerseits die Kompressionswärme absorbiert und anderseits die Flanken der Rotoren schmiert und abdichtet. Speziell bei Luftkompressoren ist es zwingend notwendig, dass die Menge und Temperatur der eingespritzten Flüssigkeit derart aufeinander abgestimmt sind, dass der Taupunkt des Wasserdampfs unterhalb der Temperatur des Luft-Öl-Gemischs am Auslass bleibt, um das Ausfallen von Kondenswasser in das Öl zu verhindern.

Um ein Kondensieren der in der Luft enthaltenen Feuchtigkeit im Kompressorraum zu verhindern, muss das eingespritzte Öl bereits eine Temperatur von 60 bis 70 Grad Celsius haben und erreicht typischerweise (bei angesaugter Luft von ca, 20°C) am Auslass Temperaturen von 85 bis 90 Grad Celsius, in besonders heißen Zonen auch bis zu 100 bis 110 Grad Celsius. In besonders heißen Gegenden wird die Öl-Einspritztemperotur automatisch mit der Umgebungsluft gesteigert, was dazu führt, dass die Öleinspritztemperatur ungefähr 80 bis 85 Grad Celsius betragen kann, wodurch sich die Alterungsrate des heißen Öls durch die gestiegene Durchschnittstemperatur verdreifacht, Die Öl-Einspritztemperatur wird dabei in Abhängigkeit von der Umgebungstemperatur und Luftfeuchtigkeit automatisch gesteuert.

Derartige Kompressoren erreichen typischerweise 7,5 bis 8,5 bar, ausnahmsweise 20 bar am Auslass. Mobile Kompressoren, wie sie bei Baustellen benötigt werden, erfordern besonders hohe Drücke. Das Verhältnis von eingespritztem Öl zu Luft beträgt ungefähr 7-8 Liter/m³ angesaugter Luft. Erhöhte Auslassdrücke erfordern größere Mengen von eingespritzter Flüssigkeit, um die Temperatur am Ausgang des Verdichters zu beschränken und damit die Oxidationsgeschwindigkeit des Schmiermittels zu begrenzen. Auf der anderen Seite erhöht sich durch das Einspritzen zu großer Mengen gekühlten Öls das Risiko, den Taupunkt des Wasserdampfs der feuchten Luft zu erreichen. Die Einstellung der richtigen Menge an eingespritztem Öl und der richtigen Öltemperatur muss als in Abhängigkeit von den Umgebungsbedingungen vorgenommen werden. Dafür existieren auch automatische Regelungen.

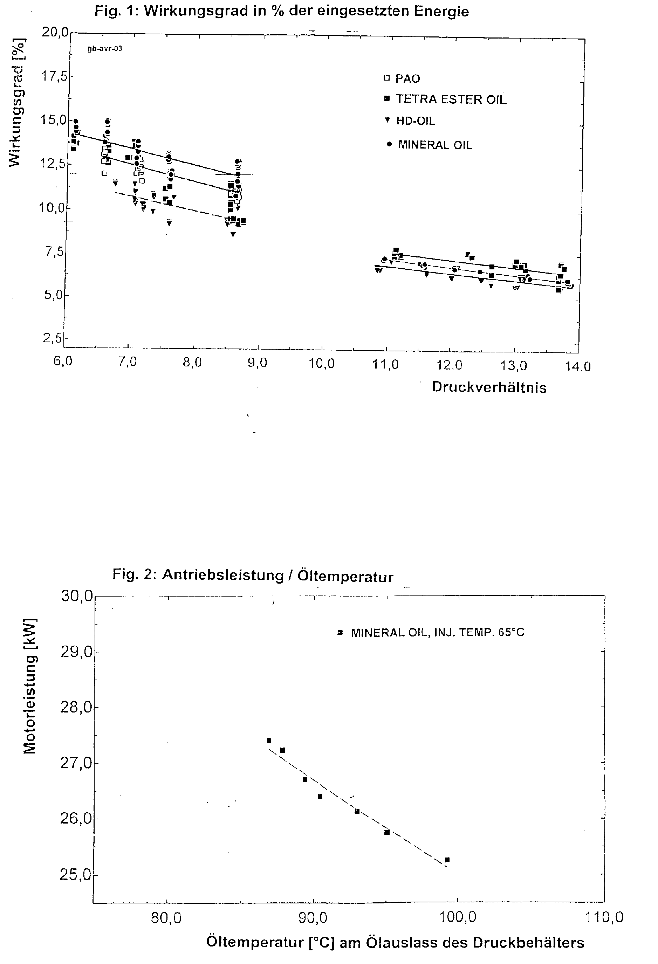

Aus wirtschaftlicher Sicht ist auch zu beachten, dass mit zunehmender Einspritzmenge des Schmiermittels die der Energieverbrauch zunimmt. Ein optimaler Wirkungsgrad liegt dann vor, wenn eine minimale Menge von Schmiermittel eingespritzt wird. Minimal bedeutet hier diejenige Flüssigkeit, die ausreichend ist, um einen ausreichend dicken Film über die Lager zu legen und die Lager ausreichend zu kühlen. Vom Erfinder durchgeführte Tests, deren Ergebnisse in den Figuren 1 bis 5 zusammengefasst sind, bestätigen, dass die Reduktion der eingespritzten Ölmenge bei einem Testkompressor zu folgenden Ergebnissen führt. Die folgenden Figuren verdeutlichen das zuvor gesagte an Hand von vom Erfinder aufgenommenen Messwerten.

Figur 1 erläutert den Zusammenhang zwischen dem Netto-Wirkungsgrad am Auslass des Druckbehälters des Kompressors bei unterschiedlichen Druckverhältnissen. Es wird deutlich, dass der Wirkungsgrad am Auslass mit zunehmendem Druck immer geringer wird, Dies liegt an den höheren Öldurchsützen und den großen Mengen deswegen abzuführender Wärme, sowie den internen Leckagen. Außerdem hängt der Wirkungrad vom verwendeten Öl ab.

Figur 2 zeigt, das mit abnehmendem Ölstrom (von links nach rechts) eine zunehmende Öltemperatur entsteht und eine geringere Motorleistung benötigt wird. Diese liegt an der verringerten in den Kompressor eingespritzten Ölmenge.

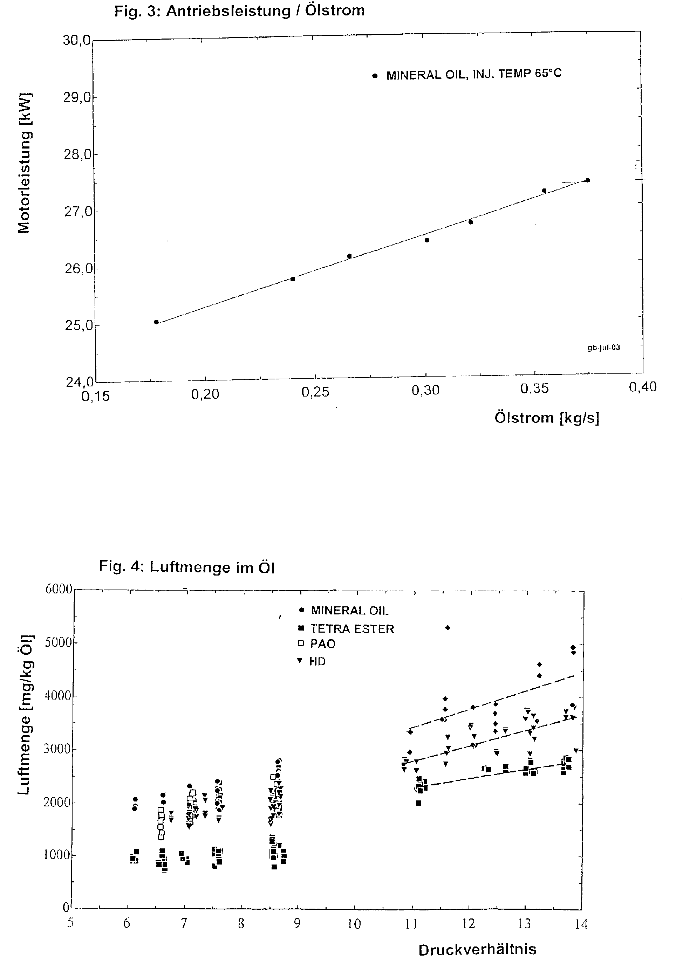

Dementsprechend zeigt Figur 3, wie die notwendige Kompressor-Antriebsleistung mit zunehmendem Ölstrom steigt. Es wird deutlich, dass es mit Blick auf den Wirkungsgrad wünschenswert ist, möglichst geringe Mengen Öl einzuspritzen, das dann naturgemäß mehr Wärme pro Kilogramm Öl aufnehmen muss und daher höhere Temperaturen erreicht. Dabei ist jedoch problematisch, dass mit hohen Temperaturen zunehmende Alterung des Öls eintritt.

Figur 4 verdeutlicht, dass mit zunehmendem Druckverhältnis, das heißt mit zunehmendem Druck des verdichteten Öl-Luftgemischs, ein zunehmender Lufteinschluss von Luft im Öl stattfindet. Dieser ist nicht gewünscht, da durch eine vergrößerte Kontaktfläche zwischen Öl und Luft das Öl schneller oxidiert, d. h. altert. Es ist zu erkennen, dass die im Öl enthaltenden Mengen sehr hoch sind und in hohem Maße in oxidationsrelavant sind.

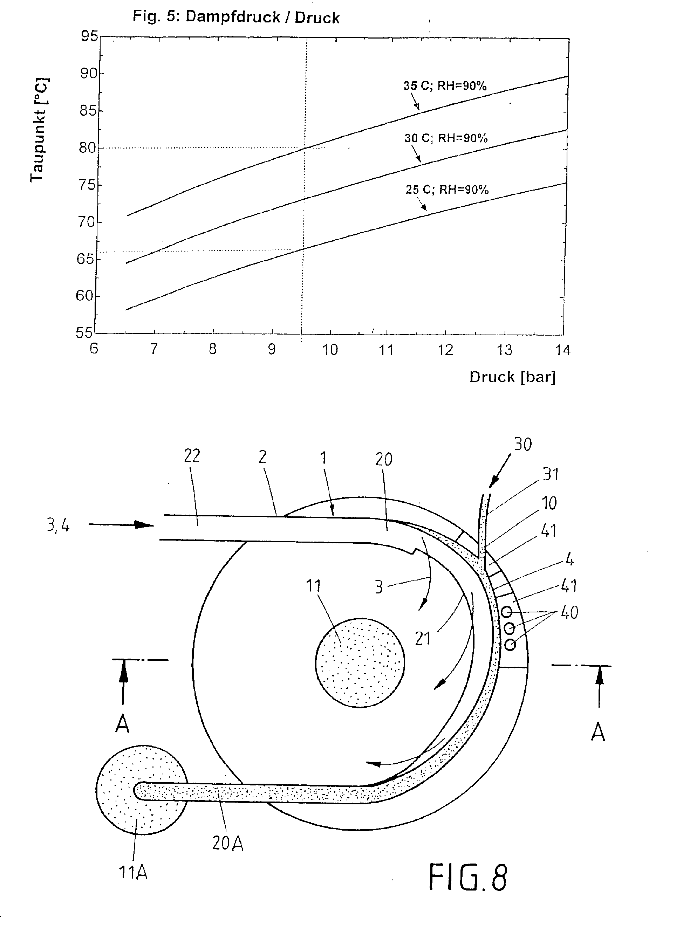

Figur 5 erläutert, dass das Einspritzen von kaltem Öl in den Verdichter nicht immer eine geeignete Möglichkeit zur Reduzierung der Temperatur des Öls im Druckbehälter zur Verringerung der Alterung des Öls ist. Je nach Lufttemperatur und Luftfeuchtigkeit der angesaugten Umgebungsluft kommt es zu Kondensationserscheinungen, das heißt Kondenswasser schädigt die zu schmierenden und kühlenden Rollen und Kugellager, sowie die Rotoren des Kompressors.

Das komprimierte Luft-Ölgemisch verlässt den Verdichter und strömt in einen Druckbehälter, der gleichzeitig als Ölabscheider dient. Die vom Öl befreite Druckluft verlässt den Druckbehälter bzw. Ölabscheider und wird extern auf ungefähr 30 Grad gekühlt, bevor die Druckluft zum entsprechenden Verbraucher, beispielsweise Presslufthammer, strömt. Die Temperatur der Druckluft ist dabei natürlich abhängig von der Umgebungstemperatur.

Das abgeschiedene Öl sammelt sich im unteren Bereich des Druckluftbehälters bzw, Abscheiders. Dort wird das Öl in einem Auffangbecken gesammelt und verweilt je nach Zirkulationsdauer des Öls ca. 60 Sekunden, bevor es nach dem Durchlaufen des externen Kühlers erneut in den Verdichter gespritzt wird. Dabei altert, das heißt oxydiert, das Öl wegen der hohen Temperaturen und der auf Grund der Verdichtung sehr konzentrierten Luft mit entsprechenden Sauerstoffmengen sehr schnell.

Das Öl durchläuft typischerweise folgenden Zyklus: Beim Einspritzen in den Kompressor verweilt es dort ca. 0,003 Sekunden, in dem heißen Druckbehälter 40 bis 60 Sekunden (wo daher die meiste Zersetzung des Öls stattfindet) und im Leitungssystem und dem Ölkühler für ungefähr 4 Sekunden. Durch das Öl wird erreicht, dass ungefähr 65 % der eingebrachten Energie im Ölkühler und 15 % im Kühler für die verdichtete Luft abgeführt wird.

Ein Ölabscheider nach dem Stand der Technik arbeitet wie folgt. Das verdichtete Öl-Luftgemisch trifft tangential durch eine Einlassöffnung auf die Innenwand des zylindrischen Ölabscheiders, der gleichzeitig die Wand des Druckluftbehälters sein kann. Durch das Umlenken des Öl-Luftstromes an der gebogenen Innenwand schlägt sich das in der Druckluft enthaltene Öl an dieser nieder, wobei durch die Zentrifugalkräfte und den freien Wirbel, in den die komprimierte Luft gezwungen wird, das Trennen der leichteren Luft von dem schwereren Öl erleichtert wird. Die komprimierte Luft bzw, das Öl habe eine Dichte von ca, 8,5 kg/m³ bzw, 850 kg/m^{3.} Das an der Innenwand niedergeschlagene Öl bildet einen sich aufweitenden und daher breiten Flüssigkeitsfilm mit hoher Luft-Öl-Kontaktflöche, der nach entsprechendem Geschwindigkeitsabbau die Innenwand herunter fließt und sich unten in einer Auffangwanne sammelt, um dort auszugasen.

Im Ölabscheider liegt die Luft im Schmiermittel in zwei unterschiedlichen Formen vor:
a) Luftblasen mit einer Größe von ca. 1 bis 100 *µ*m
b) Gelöste Luft.

Die Luftblasen entgasen in der Regel derart, dass sie zu der Oberfläche wandern und sich dort mit der oberhalb des Ölstands befindlichen verdichteten Luft im Abscheider verbinden. Jedoch ist die Steiggeschwindigkeit einer 10 µm großen Luftblase lediglich ca. 0,05 cm/s, was wenig zum Entgasen beiträgt, Wirkungsvoller ist eine Reduzierung des Druckes oder das Kühlen des Öls, Während des Betriebs wird sich daher im System ein Gleichgewicht einstellen, bei dem eine große Menge von Luftblasen immer im Öl verbleibt und mit dem Öl zurück in den Kompressor geführt wird.

Die gelöste Luftmenge dagegen entgast wegen der kurzen Verweilzeiten und den dort vorherrschenden hohen Temperaturen nur unmerklich im Ölseparator. Die in Form von Luftblasen vorliegende Luft wird wegen der großen Kontaktfläche mit dem Öl sogar nachteilhafter Weise auch dafür sorgen, dass weitere Luft sich im Öl löst.

Bei Mineralöl beträgt der Anteil der Luftblasen ungefähr 12 Volumen-% und 11 bis 14 % der Luft ist in dem Öl gelöst, Diese Werte wurden ermittelt bei einem Mineralöl mit einem Druck von 7,5 bar, das heißt einem Druckverhältnis von P2/P1 =8,5.

Die hohen Temperaturen fördern die Zersetzung, insbesondere die Oxydation des Öls. Deshalb sind den Ölen eine Vielzahl chemischer, insbesondere synthetischer, Stoffe zugesetzt, die die Umwelt belasten und deren Entsorgung mit zusätzlichen Kosten verbunden ist, Biologisch abbaubare Schmierstoffe haben weniger bzw. keine solche Additive und haben deswegen den Nachteil, dass sie besonders schnell sich zersetzten, insbesondere oxydieren. Dabei ist zu beachten, dass eine Erhöhung der Temperatur um 10 Grad Celsius zur Verdopplung der Oxydationsgeschwindigkeit führt. Die Oxidationsgeschwindigkeit steigt mit der Temperatur nach folgendem Schema:

| Temperatur | Faktor |
|---|---|
| 80° C | 1 |
| 90° C | 2 |
| 100° C | 4 |
| 110° C | 7 |

Die zuvor genannten Angaben sind ermittelt ohne Berücksichtigung von katalytischen Effekten, beispielsweise Metalloberflächen, Metallpartike!n, Staub oder Sand, welche die Oxidationsgeschwindigkelt beeinflussen können. Es ist jedoch offensichtlich, dass durch Verringerung der Reaktionszeit zwischen dem heißen Öl und der komprimierten Luft eine Verlängerung der Lebenszeit des Öls bewirkt werden kann.

Die Zersetzung muss nicht zwingend durch Oxidation geschehen und ist auch kein Phänomen, dass ausschließüch bei "Bio-Schmierstoffen" auftritt. So zersetzten sich Ester zunächst in einen sauren und einen alkoholischen Anteil und später in CO₂ und Wasser.

Ein Kühlen des sich an der Innenwand des Druckbehälters niederschlagenden Ölfilms ist ebenfalls problematisch, da ebenfalls die verdichtete Luft gekühlt wird, was unerwünschten Kondenswasserbildung führt. Es entstehen Öl-Wasseremulsionen, welche die zu schmierenden Rollen- und Kugellager und die Rotoren schädigen.

US 4,906,264 offenbart einen Ölabscheider mit einem Einlass für das Gas-Öl-Gemisch, wobei der Einlass in einem Rohr mündet, welches derart gekrümmt ist, dass das Öl mittels Zentrifugalkraft in dem Rohr abgeschieden werden kann.

US 3,989,48 und DE 19738912 offenbaren Vorrictungen zum Trennen von Flüssigkeiten aus Gasen, wobei ebenfalls in einem gebogenen Rohr mittels Zentrifugalkraft Flüssigkeiten abgeschieden werden können.

Es ist daher Aufgabe der vorliegenden Erfindung einen Ölabscheider zu schaffen, bei dem das abgeschiedene Öl, insbesondere biologisch abbaubares Öl, weniger schnell altert und der insbesondere wirtschaftlicher betreibbar ist,

Diese Aufgabe wird gelöst durch eine Vorrichtung nach dem Anspruch 1, Vorteilhafte Ausgestaltungen sind Gegenstand der Unteransprüche.

Erfindungsgemäß ist eine Rinne zum Auffangen der durch die Zentrifugalkräfte abgeschiedenen Flüssigkeiten vorgesehen. Die Rinne kann beispielsweise gebildet werden durch ein U-förmig gebogenes Stück Blech oder ein Rohr, Alternativ ist es natürlich auch möglich, die gebogene Innenwand des Abscheiders mit entsprechenden Führungsschienen oder Blechen zu versehen, die das Öl zusammenhalten. Erfindungsgemäß kommt es dabei darauf an, dass die Rinne im Wesentlichen dazu in der Lage ist, mittels Zentrifugalkräften Öl abzuscheiden und dieses oberflächen- und damit kontaktflächenverringernd zusammenzuhalten. Dies bringt folgende Vorteile:
1. Durch die geringere Oberfläche verringert sich auch die Kontaktfläche zwischen Flüssigkeit und Luft, wodurch insbesondere eine durch Oxydation verursachte Zersetzung der Flüssigkeit gemindert wird. Nach dem Stand der Technik wird am Inneren der zylindrischen Wand des Ölabscheiders nachteilhaft ein besonders großer, relativ dünner Flüssigkeitsfilm erzeugt, der weit aufgefächert die Wand entlang läuft.
2, Der kompakte Flüssigkeitsstrom kann schneller aus der heißen Zone herausgeführt und gekühlt werden, Je kürzer die Flüssigkeit heiß bleibt, um so weniger Zersetzung, insbesondere Oxydation, findet statt.
3. Durch das Zusammenhalten der Flüssigkeit werden die Zentrifugalkräfte effektiver genutzt, wodurch eine verbesserte Trennung von Luft und Flüssigkeit stattfindet. Je schneller diese Trennung bewirkt wird, um so schneller kann die Flüssigkeit den heißen Bereich verlassen.
4, Durch das Zusammenhalten der Flüssigkeit werden die kann diese besser mit gekühlt werden, ohne dass die komprimierte Luft unerwünscht unterhalb des Taupunktes gekühlt wird.
5. Durch die erfindungsgemäß geringere Alterung des Öls, kann das Öl im Kompressor höheren Temperaturen ausgesetzt werden, wodurch weniger Öl benötigt wird, weniger Antriebsleistung des Verdichters benötigt wird und der Wirkungsgrad steigt.
6, Durch die höhere Temperatur des Öls sinkt dessen Viskosität und die Reibungsarbeit des Verdichters wird reduziert.

Erfindungsgemäß wurde entgegen einem Vorurteil der Fachwelt erkannt, dass das in den Verdichter eingespritzte Öl nicht "atomisiert" wird. ("heat exchange in liquid injected compressors", Jan-Gunnar Persson, Royal Institute of Technology, Stockholm; VDI-Bericht "Untersuchungen zur Ölverteilung in Schraubenkompressoren mit Schmiermitteleinspritzung").

Vielmehr verbleibt der größte Teil des Öls zusammenhängend, das heißt in größeren tröpfchenförmigen Ansammlungen. Daher sind zum Trennen (Massentrennung aufgrund unterschiedlicher spezifischer Dichte) von Flüssigkeit und Öl nur geringe Geschwindigkeiten notwendig, beispielsweise eine solche Geschwindigkeit, die ausreichend ist, um Zentrifugalkräfte zu erzeugen, die einem radialen Druckunterschied in der Öl-Luftschicht von 0,01 - 1 bar, vorzugsweise 0,05 -0,25 und insbesondere vorzugsweise 0,1 bis 0,2 bar erzeugen. Die Zentrifugalkräfte hängen dabei nicht nur von der Öl-Luftgrenzschicht in der Rinne ab, sondern natürlich auch von den überlagerten Zentrifugalkräften der komprimierten Luft. Nachdem diese erstmalig die Rinne berührt hat, sind es nur die Trägheitskräfte, die auf das Öl-Luftgemisch wirken, Da das Öl nicht atomisiert, sondern vielmehr in Klumpen oder Tröpfchen vorliegt, trennt es sich beim Eintritt in den Abscheider. Als besonders geeignete Geschwindigkeiten wurde vom Erfinder eine Eintrittsgeschwindigkeit von 5 bis 20, insbesondere 1 5 - 20 m/sec. ermittelt. Bevorzugt ist außerdem, dass die Geschwindigkeit am Ende der Rinne auf ungefähr 1 bis 3 m/sec. reduziert wird. Es kommt dabei darauf an, eine Abscheidung von mindestens 50%, vorzugsweise 70% und insbesondere vorzugsweise 80 % des in der Luft mitgeführten Schmiermittels zu erreichen. Restliches Öl muss durch nachgeschaltete bekannte Filter aus der den Druckbehälter verlassenden Luft entfernt werden. Als Auslegungsregel wurde gefunden, dass die Länge der Rinne dem 1,5 - 3-fachen des Durchmessers des Behälters, also dem 3 - 6-fachen des Krümmungsradius der Rinne, entspricht. Eine zentrale Auffangwanne für das im Behälter außerhalb der Rinne abgeschiedene Öl, vergleichbar den bekannten Bauformen, ist in jedem Fall erforderlich um außerhalb der Rinne abgeschiedenes Öl zu sammeln. Bei einer gekühlten Rinne bzw. dem Einspritzen von gekühltem Öl können die Längen entsprechend reduziert werden um die gleiche Wirkung zu erzielen.

Vorteilhafterweise kann die Rinne derart gestaltet sein, dass ein Abbremsen des Ölstroms bewirkt werden kann, beispielsweise durch Steigungen, rauer Oberfläche oder Strömungswiderstand fördernden Geometrien.

Erfindungsgemäß kommt es im Wesentlichen darauf an ,dass das in der Rinne geführte Öl schneller seine Geschwindigkeit abbaut als die verdichtete Luft insbesondere derart, dass die Ölschicht die verdichtete Luft das Ausbilden eines freien Wirbels gestattet. Es kommt nicht darauf an, dass das Öl-Luftgemisch vollständig in seine Bestandteile zerlegt wird. Eine Trennung von ca. 80 % in der Rinne ist schon ein sehr guter Wert, wobei mehrstufige Abscheidungsprozesse zur Steigerung der Trennungsrate eingesetzt werden können. Wichtig ist, das eine gewisse Menge Öl schnellstmöglich aus der Heißen Zone abgeführt wird.

Der Fachmann kann ohne Weiteres durch Versuche die für den jeweiligen Anwendungsfall zweckmäßigen bzw. optimalen Parameter ermitteln, wobei insbesondere folgende Parameter wichtig sind:
- Verhältnis Öl zu Luft;
- Viskosität der Flüssigkeit;
- Durchmesser des Einlasses;
- In der Rinne führbares Volumen;
- Biegung der Rinne,

Erfindungsgemäß ist die Rinne derart in Richtung der Rinnenoberseite gekrümmt oder gebogen, dass mittels Zentrifugalkraft das im Luftstrom enthaltene Öl abgeschieden werden kann. Dies ist nicht so zu verstehen, dass die Rinne immer gleich, beispielsweise exakt senkrecht, d. h. Rinnenboden seitwärts gerichtet, ausgerichtet sein muss. Wesentlich ist nur, dass die Rinnenoberseite dem im Gas-Ölgemisch mitgeführten Gas die Möglichkeit gibt, zu entweichen und der Rinnenboden die durch die Zentrifugalkräfte abgeschiedene Ölmenge abführen kann, ohne dass Ol über den Rand fließt. Da die abgeschiedene Flüssigkeit über die Länge der Rinne zunehmend abgebremst wird, ist es vielmehr zweckmäßig, dass die Rinne z. B. von einer senkrechten zu einer mehr oder weniger waagerechten Ausrichtung wechselt.

Die verringerte Geschwindigkeit, mit der erfindungsgemäß die Zentrifugaleffekte bewirkt werden, haben den Vorteil, dass die einströmende Luft nicht mit so großen Geschwindigkeiten auf das bereits an der Seitenwand abgeschiedene Öl trifft, dass dieses erneut zerstäubt. Beim Eintritt in den Abscheider, das heißt die Rinne, ist der Druckunterschied in Strömungsrichtung gesehen gleich Null, Demzufolge ist die kinetische Energie (Trägheitskräfte) die einzige Antriebskraft der Ölschicht. Dem wirken als bremsende Kräfte die Scherkräfte oder innere Reibung der Ölschicht entgegen. Die komprimierte Luft dagegen bildet einen freien Wirbel und treibt die Ölschicht an, Die verdichtete Luft verlässt die Rinne senkrecht dazu, da die verdichtete Luft ständig den Abscheider verlässt (Entnahme der Pressluft), Erfindungsgemäß beträgt diese Vertikalgeschwindigkeit ungefähr 0,05 bis 0,3 m/sec. Eine theoretische Beurteilung der Bedeutung der Luftblasen in der Ölschicht und der Turbulenz der Strömung ist schwierig. Unter der Annahme von 1 00 % Turbulenz und einer Einströmgeschwindigkeit von 10 m/s und einer Viskosität von 20 cSt (beim Einspritzen in den Verdichter) bzw. 9,0 cSt (beim Einlass in den Abscheider) bei vermischten Ölen (1/3 heißes und 2/3 gekühltes Öl) sorgen die Scherkräfte dafür, dass die Geschwindigkeit innerhalb des ersten Meters der Rinne auf 1 bis 2 m/s reduziert werden. Dies setzt natürlich voraus, dass die Rinne derart ist, dass die Luft sich in Bezug auf die Rinnenunterseite sowohl vertikal ,als auch radial frei bewegen kann.

In einer weiteren Ausgestaltung der Erfindung ist vorgesehen, dass die in der Rinne abgeschiedene Flüssigkeit direkt aus dem Ölabscheider herausführt wird. Dadurch verbleibt das Öl kürzere Zeit in der heißen Zone, wodurch die Zersetzung, insbesondere Oxidation gemildert wird. Dabei wurde erkannt, dass die beim Stand der Technik übliche Auffangwanne, in der das Öl absichtlich für längere Zeit den hohen Temperaturen ausgesetzt ist, nicht erforderlich ist, da das Ausgasen des Öls ohnehin erst nach der Druckminderung stattfindet. Das Gas liegt nämlich in drei Zuständen im Gas-Ölgemisch vor: gelöstes Gas, Gasblasen und freies Gas. Der Hauptteil des komprimierten Gases ist ohnehin freies Gas. Nur ein kleiner Teil ist gelöst.

Vorteilhafterweise besteht die Rinne aus einem Rohrstück, wodurch der Fertigungsaufwand sinkt. Um das Abscheiden des Gases zu erleichtern, kann das Rohr nach innen gerichtete Öffnungen, beispielsweise Bohrungen, Schlitze oder Langlöcher aufweisen, die die Rinnenoberseite bilden.

Besonders vorteilhaft ist dabei das Vorsehen einer Öffnung, deren Querschnitt über die Länge des Rohrs stetig zunimmt. Dies berücksichtigt, dass sich zunehmend eine dickere Flüssigkeitsschicht im Rohr sammelt, wodurch der freie Querschnitt für das schneller strömende Gas stetig abnimmt. Ohne dies Maßnahme würde die Luft durch dieses Verengung zunehmend schneller werden und unerwünschterweise Flüssigkeitspartikel mit sich reißen. Wenn die Öffnungen im gleichen Maße zunehmen wie die Dicke der Flüssigkeitsschicht, erhält man besonders gleichmäßige Strömungsbedingungen , wodurch ein besseres Abscheideergebnis erzielt werden kann.

Die Ausgestaltung mit Anordnung der Rinne im Bodenbereich verringert die Durchlaufstrecke durch den Abscheider bzw. den Drucktank auf dem Weg zur Senke oder dergleichen.

In einer weiteren Ausgestaltung sind Mittel zum Kühlen des abgeschiedenen Flüssigkeitsstroms vorgesehen. Optimal kann die Kühlung stattfinden, wenn ausschließlich die der heißen Luft abgewandte Seite des Flüssigkeitsstroms gekühlt wird, um ein Kondensieren der in der Luft enthaltenen Flüssigkeit zu verhindern. Dabei ist es von Vorteil, wenn als Kühlmittel bereits abgeschiedene und gekühlte Flüssigkeit verwendet wird. Diese kann zum Beispiel an der Unterseite der Rinne diese kühlen, wobei durch geeignete Isolationsmittel ein direkter Kontakt der Kühlungsmittel mit der komprimierten heißen Luft zu verhindern ist.

Eine besonders effektive Kühlung kann bewirkt werden, wenn insbesondere das bereits gekühlte und abgeschiedene oder fremdes Öl unmittelbar in die Rinne, insbesondere von der Unterseite her, eingespritzt wird und sich dabei mit dem abgeschiedenen Öl verbindet. Auch dabei ist darauf zu achten, dass das bereits gekühlte Öl nicht derart unmittelbar mit der komprimierten Luft in Verbindung treten kann, dass die Gefahr der Kondenswasserbildung bei Unterschreitung des Taupunktes besteht.

Das gekühlte Öl in der Rinne hat ferner den Vorteil, dass es durch seine gesteigerte Viskosität die Ölpartikel besser einfangen kann und deren Geschwindigkeit schneller abgebaut wird.

Die erfindungsgemäße Wirkung kann beispielsweise erzielt werden, wenn das Öl-Luftgemisch am Einlass eine Geschwindigkeit von 5 bis 25 m/s, vorzugsweise 10-20 m/s hat. Bei der Verwendung von Mineralöl und einem Pressluftdruck von 8,5 bar(a) hat das Schmiermittel eine Dichte von ca. 825 kg/m³ (bei 85 °C) und die verdichtete Luft hat eine Dichte von 8,25 kg/m³, ebenfalls bei 85°C. Das Volumenverhältnis der verdichteten Luft beträgt das 1 7-fache des Ölvolumens beim Eintritt in den Druckbehälter (Abscheider). Das Volumen des Öls hängt vom Öltyp ab, Für gleichen Arbeitsdruck , z. B. bei einem Enddruck von 8,5 bar, kann die Ölmenge zwischen 7 und 9 liter-Öl / m³-Luft am Einlass des Abscheiders variieren.

Die offene Rinne bewirkt außerdem, dass die abgetrennte Luft einen freien Wirbel im Abscheider bildet, wodurch die Geschwindigkeit zwischen Öl- und Luftschicht besonders schnell abgebaut werden kann. Dies verhindert, dass Ölpartikel durch den Luftstrom gelöst und mitgerissen werden.

In einer weiteren Ausgestaltung ist der Ölkühler in einer Isolierung eingekapselt und im Inneren des Abscheiders bzw. Druckgefäßes vorgesehen. Es ergibt sich gegenüber dem Stand der Technik der Vorteil kleiner Bauformen. Alternativ kann der Ölkühler auch neben dem Druckbehälter befestigt sein. Das Volumen in dem Ölkühler und den Verbindungsleitungen kann dabei genutzt werden um sicher zu stellen, dass komprimierte Luft nicht mit dem Öl mitgeführt wird.

Erfindungsgemäß kann auch das Rohr bzw. die Rinne außerhalb des Druckluftbehälters angeordnet sein und lediglich über die Öffnungen zum Entweichen der komprimierten Luft druckdicht mit diesem verbunden sein.

Die Kühlung vereinfacht sich durch diese externe Anbringung, da weniger Schutzmaßnahmen zum Isolieren gegen die im Druckbehälter komprimierte Luft wegen der Kondenswasserbildung getroffen werden müssen. Dabei sind bevorzugt eine Vielzahl von Öffnungen vorzusehen, die mit einer radialen Richtungskomponente in Richtung auf den Druckbehälter führen

In einer weiteren Ausgestaltung sind in der Rinne Öffnungen zum Abführen des aufgefangenen Öls in im Wesentlichen radialer Richtung vorgesehen. Diese sind derart angeordnet, dass durch die Fliehkräfte das abgeschieden Öl gleichsam nach außen geschleudert wird und somit den Druckbehälter mit der zersetzungsfördernden komprimierten Luft schnellst möglich verlassen kann. Die Abführrichtung kann auch eine tangentiale Komponente in Bewegungsrichtung des Öls enthalten um keine unnötigen Widerstände zu erzeugen. Dabei ist zu beachten, dass die Öffnungen immer mit Öl bedeckt sind, um das unerwünschte Entweichen von Luft zu verhindern. Es wird also immer nur ein Teil des abgeschiedenen Öls radial abgeführt. Schließlich ist es aus diesem Grund bevorzugt, die radial abgeführte Ölmenge durch entsprechende Stellglieder, beispielsweise Schieber, Drosseln und dergleichen regulieren zu können. Besonders einfach ist dies technisch durch zwei ineinander gelagerte und gegeneinander verschiebbare Rinnen mit korrespondierenden Öffnungen möglich. Hierbei kann je nach Last und Umgebungsbedingungen - auch automatisch mittels einer entsprechenden Steuerung - ein optimaler Öffnungsquerschnitt bereitgestellt werden.

Der anspruchsgemäß verhältnismäßig kleine Querschnitt der Senke verhindert den Wärmeaustausch mit der komprimierten Luft, mindert die Oxidation durch die reduzierte Kontaktfläche und ermögliche die Kühlung im unteren Bereich der Senke ohne Kondenswasserbildung, da dieser Bereich kaum in Kontakt mit der heißen Luft kommt.

Wenn die Senke asymmetrisch zum Querschnitt des Druckbehälters angeordnet ist, kann das in der Rinne gesammelte Öl auf schneller auf kürzerem Weg und ohne radial auf die Senke zugeführt zu werden, die Senke erreichen.

Biologisch abbaubare Kompressoröle, die in den erfindungsgemäßen Kompressoren, enthaltend die erfindungsgemäßen Ölabscheider, verwendet werden können, schließen beispielsweise solche ein, deren biologische Abbaubarkeit nach CEC L-33T-82 zweckmäßig mindestens etwa 60 %, bevorzugt mindestens etwa 70, bevorzugter mindestens etwa 80 %, noch bevorzugter mindestens etwa 90% beträgt, wie zum Beispiel: pflanzliche Öle, wie pflanzliche Triglyceridöle, wie insbesondere Rapsöle, synthetische Ester, wie synthetische Triglycerid-Öle sowie Polyglykole. Tetraesteröle sind sogar zu 100% abbaubar. Beispiele sind in der CA 2111777 oder der WO 88/05808 beschrieben. Genannt werden können auch die Reolube-Typen, wie REOLUBE LT 2100 oder die Reoplast-Typen, wie REOPLAST 39.

Eine Anordnung der Rinne im Bodenbereich des Druckbehälters hat den Vorteil, dass das abgeschiedene Öl einer geringere Zeit der Luft ausgesetzt ist, eine geringere Strecke zur Senke zurücklegen muss, im oberen Bereich des Behälters mehr Raum für den Luftfilter zur Verfügung steht und wegen der kürzeren Strecke des Ölkreislaufs weniger Öl benötigt wird um sicherzustellen, dass die Senke nicht leer laufen kann, Ferner sind dadurch platz- ,material-, und fertigungsaufwandreduzierende flache Bauformen möglich. Die Rinne befindet sich dann im Bodenbereich des Druckbehälters, wenn sie im Wesentlichen näher an der Senke als an dem oberen Rand des Druckbehälters angeordnet ist.

In einer weiteren vorteilhaften Ausgestaltung der Erfindung ist vorgesehen, dass die Rinne zumindest abschnittsweise eine Steigung aufweist, das heißt, dass das abgeschiedene Öl "bergauf" fließen muss und dadurch schneller verzögert wird. Dadurch kann das Öl über eine geringere Strecke verzögert werden und kann schneller abgeführt bzw. gesammelt werden. Es ist der heißen Umgebung daher kürzer ausgesetzt.

Wenn die Vermischung des gekühlten Öls mit dem heißen abgeschiedenen Öl durch eine entsprechende Regelung und Steuerung derart vermischt werden kann, dass dadurch eine gewünschte mittlere Öltemperatur erreicht und auch über eine gewisse Zeit gehalten werden kann, ist es möglich, den Verdichter, insbesondere den Schraubenverdichter, mit Öl zu versorgen, welches temperaturmäßig optimal an die Umgebungsbedingungen (Lufttemperatur und Luftfeuchtigkeit) angepasst ist, um insbesondere die Kondensation der Luftfeuchtigkeit zu verhindern.

Weitere Vorteile ergeben sich aus der folgenden Beschreibung und der beigefügten Zeichnung. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter. Wenngleich die Erfindung anhand eines Ölabscheiders zum Trennen von Öl aus einem Luft-Ölgemisch erläutert und beschrieben ist, so fällt erfindungsgemäß unter dem Begriff Ölabscheider jeder Abscheider zum Trennen einer flüssigen von einer gasfärmigen Phase bei einem Kompressorprozess, wobei die Flüssigkeit zum Schmieren und/oder Kühlen des Kompressors dient. Demzufolge ist unter dem Begriff "Luft" jede gasförmige, zu komprimierende Phase zu verstehen und unter dem Begriff "Öl" jede flüssige, abzuscheidende Phase, also insbesondere ein Schmier- und/oder Kühlmittel, Die Erfindung und insbesondere die Ansprüche sind also nicht auf einem Ölabscheider bei einem Pressluftkompressor beschränkt.

Die Erfindung wird anhand der folgenden Zeichnung erläutert, und zwar zeigt
Figur 6 den erfindungsgemäßen Ölabscheider in der Aufsicht,
Figur 7 einen Seitenschnitt durch den Abscheider aus Figur 6 und
Figur 8 eine weitere Ausgestaltung des erfindungsgemäßen Ölabscheiders in der Aufsicht,

In einem zylinderförmigen Drucktank 10 für Druckluft aus Fig, 6, und 7 ist der rohrförmige Ölabscheider 1 eingebaut, Das vom nicht dargestellten Kompressor kommende Rohr 22 mündet in einen Einlass 2, der nahtlos in den aus einem Rohrstück 20 gefertigten Ölabscheider 1 übergeht. Das Rohrstück 20 ist so gebogen, dass das in Pfeilrichtung einströmende Gas-Ölgemisch 3, 4 auf eine Kreisbahn gezwungen wird. Dabei schlagen sich an der Außenseite oder dem Rinnenboden, d. h. der auf die Zentrifugalkraft bezogenen Unterseite, des Rohrstücks 20 Ölpartikel 4 nieder, die, getrieben von der Schwerkraft bzw, dem Luftstrom 3, sich gegebenenfalls spiralförmig in Richtung auf die im Vergleich zum Stand der Technik kleinen Senke 11 bewegen. In zunehmender Entfernung vom Einlass 2 schlägt sich immer mehr Öl 4 im Inneren des Rohrstücks 20 nieder. Die Oberseite 21, d. h, die der Unterseite des Rohrstücks abgewandte Seite des Rohrstücks 20 ist daher offen und erlaubt das Entweichen der Luft 3 und damit eine Trennung von Luft 3 und Öl 4.

Zur schnelleren und effektiveren Abkühlung des Öls 4 sind zwei verschiedene Maßnahmen vorgesehen, die gemeinsam oder alternativ angewendet werden können. Die Rinnenunterseite kann durch Kühlmittel bzw. Kühlschlangen 40 abgekühlt werden. Um unerwünschte Kondenswasserbildung aus der komprimierten Luft zu vermeiden, findet die Abkühlung nur in dem Bereich statt, der mit einem Ölfilm aus abgeschiedenem Öl 4 abgedeckt ist, Darüber hinaus ist eine Isolierung 41 vorgesehen, die eine direkte Wechselwirkung zwischen Kühlvorrichtung 40 bzw. abgekühlter Rinnenunterseite und komprimierter Luft 3 verhindert. Als Kühlmittel kann beispielsweise bereits extern gekühltes Öl aus dem Ölkreislauf des Druckluftkompressors benutzt werden,

Gekühltes Öl 30 kann auch direkt über eine Ölleiiung 31 in das Rohrstück 20 eingespritzt werden. Dabei ist darauf zu achten, dass kein Kontakt des gekühlten Öls 30 mit der heißen Luft 3 stattfindet. Daher sollte das gekühlte Öl 30 in solchen Mengen und derart eingeleitet werden, dass es einen ruhigen Film bildet, an dem sich das durch Zentrifugalkräfte abgeschiedene Öl isolierend anlagern kann,

Die komprimierte und im Wesentlichen ölfrei komprimierte Luft passiert einen Ölfilter 60 und verlässt den Behälter 10 über die Pressluftleitung 61, die zum einem Verbraucher - gegebenenfalls nach dem Durchlaufen eines weiteren Reinigungs- und/oder Kühlprozesses - führt.

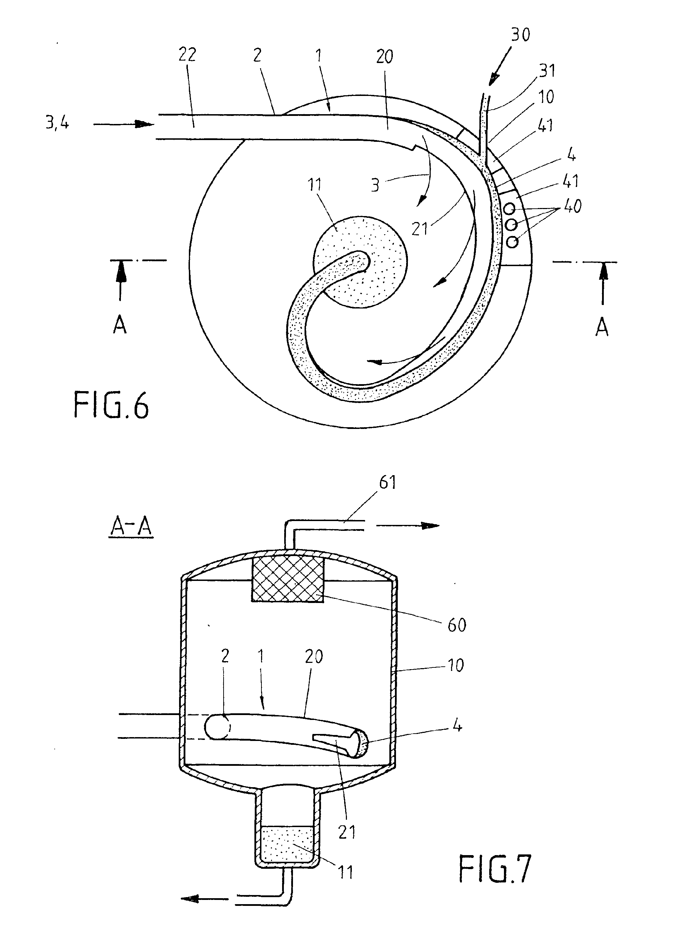

Der Ölabscheider aus Figur 8 entspricht in Bezug auf die Rinne 20 und den übrigen Bauteilen im Wesentlichen dem aus Figur 6 bekannten Ölabscheider, Alternativ ist hier jedoch vorgesehen, dass das Rohrstück 20 den rohrförmigen Ölabscheider 1 verlässt und über ein druckdichtes Anschlussstück 20a mit einer ebenfalls in einem weiteren Druckbehälter (bei 11a - nicht dargestellt) vorgesehenen weiteren Senke 11a verbunden ist.

Dadurch ist sichergestellt, dass das abgeschiedene Öl schnellst-möglich den heißen Druckbehälter 1 verlässt und extern, das heißt im Bereich des zusätzlichen Druckbehälters (bei 11a) effektiv gekühlt werden kann.

## Patentansprüche

1. Ölabscheider (1) zum Abscheiden von Öl (4) aus einem komprimierten Gas-Öl-Gemlsch mit einem Einlass (2) für ein Gas-Öl-Gemlsch (3,4), wobei der Elnlass (2) in einer Rinne (20) mündet, wobei die Rinne (20) in Richtung der Rinnenoberseite (21) gekrümmt ist,,
**dadurch gekennzeichnet**
**dass** eine Kühlvorrichtung (30,40) zum teilweisen oder vollständigen Kühlen der Rinne an der Rinne vorgesehen ist.

2. Ölabscheider nach Anspruch 1, **dadurch gekennzeichnet, dass** ein Rohrstück die Rinne bildet, wobei vorzugsweise das Rohr entgegen der Richtung der Zentrifugalkraft gerichtete Öffnungen (21) zum Entweichen des Gases aufweist, wobei
vorzugsweise der Querschnitt der Öffnungen über die ab Einlass (2) gemessenen Länge des Rohrs zunimmt und/oder die Öffnungen mit einem Drucktank (10) in Verbindung stehen.

3. Ölabscheider nach einem der vorherigen Ansprüche, **dadurch gekennzeichnet, dass** die Rinne im Inneren eines Drucktanks vorgesehen ist, wobei vorzugsweise die Rinne am Bodenbereich des Ölabscheiders oder Drucktanks vorgesehen ist.

4. Ölabscheider nach einem der vorherigen Ansprüche, **dadurch gekennzeichnet, dass** als KühlvorrichtungZuleitungen (31) zum Zuführen von gekühltem Öl (30) an der Rinne (20), insbesondere im Rinnenboden, vorgesehen sind, die durch Öffnungen In der Rinne mit dieser verbunden sind.

5. Ölabscheider nach einem der vorherigen Ansprüche, **dadurch gekennzeichnet, dass** der Ölabscheider (1) im Inneren eines Druckbehälters (10) zum Auffangen des Gases vorgesehen ist und/oder die Rinne im Bodenbereich des Druckbehälters angeordnet ist.

6. Ölabscheider nach einem der vorherigen Ansprüche, **dadurch gekennzeichnet, dass** der Ölabscheider (1) im Inneren eines Druckbehälters (10) zum Auffangen des Gases vorgesehen ist und
im Bodenbereich des Druckbehälters eine Senke (11) vorgesehen Ist, deren Querschnitt 1 - 30, vorzugsweise 2-10 und insbesondere vorzugsweise 4 - 8 % des Querschnitts des Druckbehälters beträgt und/oder
im Bodenbereich des Druckbehälters asymmetrisch, d. h. außermittig zum Querschnitt des Druckbehälters die Senke (11) vorgesehen ist.

7. Kompressor, enthaltend den Ölabscheider nach einem der vorherigen Ansprüche,

8. Mit Druckluft betreibbare Maschine oder Werkzeug, enthaltend den Kompressor nach dem vorherigen Anspruch 7.

## Claims

1. An oil separator (1) for separating oil (4) from a compressed gas-oil mixture comprising an inlet (2) for a gas-oil mixture (3, 4), wherein the inlet (2) runs into a groove (20), wherein the groove (20) is bent into the direction of the upper side (21) of the groove,
**characterized in that**
a cooling device (30, 40) is provided on the groove for partially or completely cooling the groove.

2. An oil separator according to claim 1, **characterized in that** a piece of tube forms the groove, wherein the tube preferably comprises openings (21) which are directed against the direction of the centrifugal force for letting the gas escape, wherein
the cross section of the openings preferably increases over the length of the tube measured from the inlet (2) and/or the openings are in connection with a pressure tank (10).

3. An oil separator according to one of the preceding claims, **characterized in that** the groove is provided in the interior of a pressure tank, wherein the groove is preferably provided in the bottom area of the oil separator or pressure tank.

4. An oil separator according to one of the preceding claims, **characterized in that** supply pipes (31) for supplying cooled oil (30) are provided as cooling device on the groove (20), especially in the groove bottom, which supply pipes are connected to the groove via openings formed in this one.

5. An oil separator according to one of the preceding claims, **characterized in that** the oil separator (1) is provided in the interior of a pressure vessel (10) for collecting the gas and/or
the groove is arranged in the bottom area of the pressure vessel.

6. An oil separator according to one of the preceding claims, **characterized in that** the oil separator (1) is provided in the interior of a pressure vessel (10) for collecting the gas and a depression (11) is provided in the bottom area of the pressure vessel, the cross section of the depression being 1 - 30, preferably 2 - 10 and most preferably 4 - 8 % of the cross section of the pressure vessel and/or
the depression (11) is provided in the bottom area of the pressure vessel in an asymmetric, i.e. eccentric manner with respect to the cross section of the pressure vessel.

7. A compressor comprising the oil separator according to one of the preceding claims.

8. A machine or tool to be operated by compressed air, comprising the compressor according to the preceding claim 7.

## Revendications

1. Séparateur d'huile pour séparer de l'huile (4) d'un mélange de gaz et d'huile comprimé, comprenant une entrée (2) pour le mélange de gaz et d'huile (3, 4), dans lequel l'entrée (2) débouche dans un conduit (20), le conduit (20) étant courbé dans la direction de la face supérieure de conduit (21),
**caractérisé en ce qu'**
un dispositif de refroidissement (30, 40) est prévu sur le conduit pour refroidir le conduit partiellement ou complètement.

2. Séparateur d'huile selon la revendication 1, **caractérisé en ce qu'**une pièce de tuyau forme le conduit, le tuyau comprenant de préférence des orifices (21) dirigés contre la direction de la force centrifuge pour permettre au gaz de s'échapper, dans lequel
la section transversale des orifices augmente de préférence sur la longueur du tuyau mesurée à partir de l'entrée (2) et/ou les orifices sont reliés à un réservoir sous pression (10).

3. Séparateur d'huile selon l'une des revendications précédentes, **caractérisé en ce que** le conduit est prévu à l'intérieur d'un réservoir sous pression, le conduit étant de préférence prévu dans la zone de fond du séparateur d'huile ou du réservoir sous pression.

4. Séparateur d'huile selon l'une des revendications précédentes, **caractérisé en ce que** des conduites d'alimentation (31) pour amener de l'huile refroidi (30) sont prévues en tant que dispositif de refroidissement sur le conduit (20), notamment dans le fond du conduit, les conduites d'alimentation étant reliées au conduit par des orifices formés dans celui-ci.

5. Séparateur d'huile selon l'une des revendications précédentes, **caractérisé en ce que** le séparateur d'huile (1) est prévu à l'intérieur d'un réservoir sous pression (10) pour capter le gaz et/ou
le conduit est disposé dans la zone de fond du réservoir sous pression.

6. Séparateur d'huile selon l'une des revendications précédentes, **caractérisé en ce que** le séparateur d'huile (1) est prévu à l'intérieur d'un réservoir sous pression pour capter le gaz et une dépression du fond (11) est prévue dans la zone de fond du réservoir sous pression, la section transversale de la dépression du fond étant comprise entre 1 et 30, de préférence entre 2 et 10 et notamment de préférence entre 4 et 8 % de la section transversale du réservoir sous pression et/ou
la dépression du fond (11) est prévue dans la zone de fond du réservoir sous pression de manière asymétrique, c.-à-d. excentrique par rapport à la section transversale du réservoir sous pression.

7. Compresseur comprenant le séparateur d'huile selon l'une des revendications précédentes.

8. Machine ou outil à actionner par l'air comprimé, comprenant le compresseur selon la revendication précédente 7.
